# EUROPÄISCHE PATENTSCHRIFT

(11) **EP 0 850 426 B1**
(45) Veröffentlichungstag und Bekanntmachung des Hinweises auf die Patenterteilung: **30.01.2002**
(21) Anmeldenummer: 96931787.4
(22) Anmeldetag: 11.09.1996
(51) Int. Cl.: G01V 15/00

(54) **TRANSPONDERANORDNUNG**
TRANSPONDER ARRANGEMENT
SYSTEME REPONDEUR D'IDENTIFICATION

(30) Priorität: 15.09.1995 DE 19534229
(43) Veröffentlichungstag der Anmeldung: 01.07.1998
(73) Patentinhaber: AEG Identifikationssysteme GmbH, 89077 Ulm (DE)
(72) Erfinder: BLOCH, Werner, D-73054 Eislingen (DE); LEUCK, Lothar-Markus, D-89073 Ulm (DE); REITMAYER, Thomas, D-89614 Öpfingen (DE); MILLER, Michael, D-89614 Öpfingen (DE)
(74) Vertreter: Weber, Gerhard, Dipl.-Phys.
(86) Internationale Anmeldenummer: EP9603980
(87) Internationale Veröffentlichungsnummer: WO9710520

(56) Entgegenhaltungen:
- EP-A- 0 285 188
- WO-A-91/04503
- GB-A- 719 526
- GB-A- 2 024 522

## Beschreibung

Die Erfindung betrifft eine Transponderanordnung mit einem auf einer leitenden Fläche angeordneten Transponder.

Zur berührungslosen Abfrage von auf einem beweglichen Datenträger gespeicherten Informationen sind Transponder geeignet, die über elektromagnetische Wechselfelder Daten mit einem Abfragegerät austauschen können. Die Ankopplung an die elektromagnetischen Felder erfolgt zumindest auf Transponderseite vorzugsweise über magnetische Dipolantennen, insbesondere Luftspulen oder Ferritantennen.

Aus der DE 40 39 690 A1 ist beispielsweise eine Vorrichtung zur Erkennung von Gegenständen, insbesondere Kraftfahrzeugen bekannt, bei welcher flache Antennen einer Abfragestation mit ihren Antennenflächen parallel zur Straßenoberfläche in den Erdboden eingelassen sind. Auf Seiten der Abfrageeinrichtung ist die Sendeantenne als Doppelrahmen-Antenne, die Empfangsantenne als Einfachrahmen ausgeführt. Die Orientierung von am Unterboden von Kraftfahrzeugen angeordneten Transponderantennen ist in der Weise auf die Orientierung der Abfrageantennen bzw. deren Feldverlauf eingerichtet, daß transponderseitig die als flache Spulen auf einen rechteckigen Quader gewickelten Spulen senkrecht aufeinanderstehende horizontale bzw. vertikale Antennenflächen aufweisen.

Neben Anwendungsfällen mit in weitgehend ungestörter Umgebung befindlichen, beispielsweise von Personen getragenen Transpondern sind vor allem in der Automatisierungstechnik zur Objektidentifikation Transponderanordnungen auf elektrisch leitenden, insbesondere metallischen Flächen mit nicht einheitlicher Ausrichtung der Transponder bzw. Objekte bezüglich einer Abfrageeinrichtung von erheblicher Bedeutung.

In der GB, A, 719526 ist ein Antennensystem zur Anordnung in der Außenfläche eines Flugzeugs, insbesondere als Peilantenne, beschrieben. In einer ersten Ausführungsform ist ein Stab aus Material hoher Permiabilität mit einer Spule bewickelt und in einen Schlitz de Außenfläche des Flugzeugs eingesetzt. Gemäß einer weiteren Ausführungsform sind Stäbe aus Material hoher Permeabilitat in Vertiefungen der metallischer Oberfläche des Flugzeugs eingesetzt und mit einem Ende einer in ein Fenster der metallischen Oberfläche eingesetzten Spulenanordnung zugewandt. Eine weitere Flugzeug-Peilantenne ist aus der GB, A, 2024522 bekannt, bei welcher hinter einem durch eine dielektrische Platte abgedeckten Fenster in der metallischen Oberfläche eines Flugzeugs eine Peilantenne aus zwei gekreuzten Luftspulen angeordnet ist. Diese bekannten Anordnungen für Flugzeug-Peilantennen setzen jeweils die Unterbrechung der metallischen Oberfläche des Flugzeugs am Ort der Antenne voraus. Darüber hinaus bestehen Einschränkungen hinsichtlich der Materialbeshaffenheit der metallischen Oberläche, die nicht magnetisch sein soll.

Der vorliegenden Erfindung liegt die Aufgabe zugrunde, vorteilhafte Transponderanordnungen mit einer auf einer elektrisch leitenden Fläche angeordneten Transponderantenne sowie vorteilhafte Ausführungen von Transpondern hierfür anzugeben.

Eine erfindungsgemäße Transponderanordnung ist im Patentanspruch 1 beschrieben. Die abhängigen Ansprüche enthalten vorteilhafte Ausgestaltungen und Weiterbildungen.

Die Hauptmagnetfeldrichtung (Direktor) der Spulen ist in bekannter Weise bei flachen Spulen durch die Flächennormale der Spulenfläche, bei langgestreckten Spulen durch die Längsachse der Spule gegeben.

Es zeigt sich, daß mit den erfindungsgemäßen Transponderanordnungen bei weitgehender Freiheit hinsichtlich der Anordnung und Ausrichtung der Antennen des Abfragegeräts eine gute Feldkopplung und damit ein zuverlässiger Datenaustausch gewährleistet ist. Die Erfindung macht sich zunutze, daß ein von der Antenne des Abfragegeräts abgestrahltes Abfragesignal weitgehend unabhängig von der Orientierung der Sendeantenne des Abfragegeräts in der Nähe der elektrisch leitenden Oberfläche eine nahezu verschwindende magnetische Feldkomponente in Richtung der Flächennormalen und eine demgegenüber wesentlich größere magnetische Feldkomponente parallel zu der leitenden Fläche aufweist. Die erfindungsgemäßen Transponderanordnungen nutzen diese Feldeigenschaft durch ihre Ausrichtung bezüglich der leitenden Fläche und Anordnung auf dieser besonders vorteilhaft aus. Die Ausrichtung gilt bei Aufteilung der Transponderantenne in mehrere Teilspulen, z.B. für Senden und Empfangen getrennt, für alle Teilspulen.

Die Erfindung ist nachfolgend anhand bevorzugter Ausführungsbeispiele unter Bezugnahme auf die Abbildungen noch eingehend veranschaulicht. Dabei zeigt
- FIG. 1: einen auf einer metallischen Fläche angeordneten Transponder mit Luftspule
- FIG. 2: eine Transponderanordnung an einem Trägerrohr
- FIG.3A, 3B: zwei Ansichten einer weiteren Transponderanordnung
- FIG. 4: eine auf einer metallischen Fläche angeordnete Ferritantenne
- FIG.5A,5B: zwei Ansichten einer Transponderanordnung mit Ferritantenne
- FIG. 6: eine bevorzugte Ausführung eines Transponders mit einem Spulenabschnitt
- FIG. 7: einen Transponder nach FIG. 6 mit Befestigungseinrichtungen in Aufsicht
- FIG. 8: einen Querschnitt durch den Transponder nach FIG. 7
- FIG. 9: eine Transponderanordnung an einem Objekt

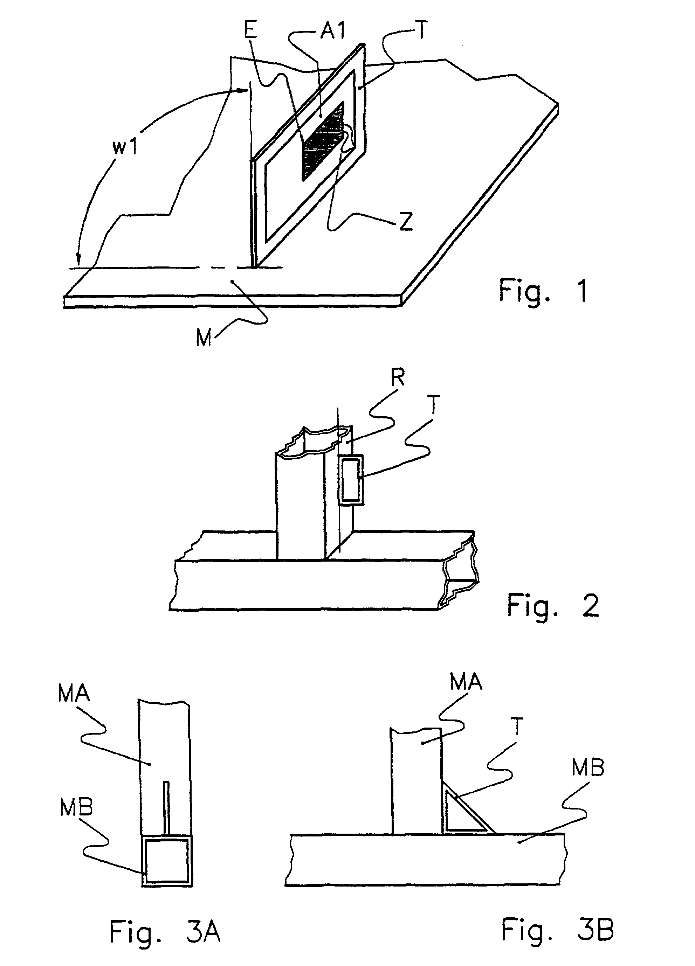

FIG. 1 zeigt in Schrägansicht eine Anordnung mit einem Transponder auf einer metallischen Fläche M. Der Transponder umfaßt in dem gezeigten Beispiel eine als flache Luftspule ausgeführte Antenne A1, die beispielsweise annähernd rechteckig gewickelt ist, sowie eine Transponderelektronik E, die mit der Antenne über Zuleitungen Z elektrisch verbunden ist. Antenne A1 und Elektronik E sind vorzugsweise auf einem gemeinsamen Trägerkörper T, der beispielsweise als flache Kunststoffkarte ausgeführt ist, angeordnet oder in einen solchen eingebettet und dadurch mechanisch stabilisiert und geschützt und einfach handhabbar. Die Antenne ist auf der metallischen Fläche M befestigt, z.B. durch Aufkleben des Trägerkörpers auf diese Fläche, wobei die von der Antenne A1 aufgespannte Fläche mit der metallischen Fläche M einen Winkel w1 von vorzugsweise 90° einschließt. Der Winkel w1 kann bei noch zufriedenstellender Funktion der Anordnung auch Werte < 90° bis zu w1> 45° annehmen. Die senkrecht zur Antennenfläche verlaufende Hauptmagnetfeldrichtung der Spule schließt dann mit der Fläche M einen Winkel von < 45° ein und verläuft vorzugsweise parallel zu dieser. Der Abstand zwischen der metallischen Fläche M und dem flächennächsten Abschnitt der Luftspule A1 ist gering, vorzugsweise < 20mm. Ein solcher Abstand kann sich z.B. durch eine Beschichtung der metallischen Fläche, einen außerhalb der Spulenfläche liegenden Randbereich des Trägerkörpers T, die Mittel zur Befestigung der Spule bzw. des Trägerkörpers auf der Fläche usw. ergeben. Die Luftspule der Antenne A1 weist bevorzugterweise an der der metallischen Fläche zugewandten Seite eine dem Verlauf dieser Fläche angepaßte Kante, für eine ebene metallische Fläche also insbesondere einen parallel zu der Fläche verlaufenden geraden Randabschnitt auf.

FIG. 2 zeigt eine Transponderanordnung mit einem Trägerkörper T der in FIG. 1 skizzierten Art, bei welcher ein Transponder an einer ebenen Fläche eines Metallrohrs R so befestigt ist, daß ein gerader Randabschnitt der Luftspule der Antenne A1 im wesentlichen entlang der Mittellinie der Rohrfläche in geringem Abstand von dieser verläuft und die von der Luftspule aufgespannte Fläche im wesentlichen senkrecht auf der Rohrfläche steht.

Für eine Metallkonstruktion wie in FIG. 2 mit einem von zwei Metallflächen 11A, 11B gebildeten Winkel ist in FIG. 3A in Blickrichtung parallel zur Spulenebene und in FIG. 3B in Blickrichtung senkrecht zur Spulenebene eine andere vorteilhafte Transponderanordnung abgebildet, bei welcher zwei Randabschnitte der Luftspule den beiden den Winkel bildenden Metallflächen parallel verlaufen und den Winkel nachbilden. Die von der Luftspule aufgespannte Fläche steht im wesentlichen senkrecht auf beiden Metallflächen 11A, 11B.

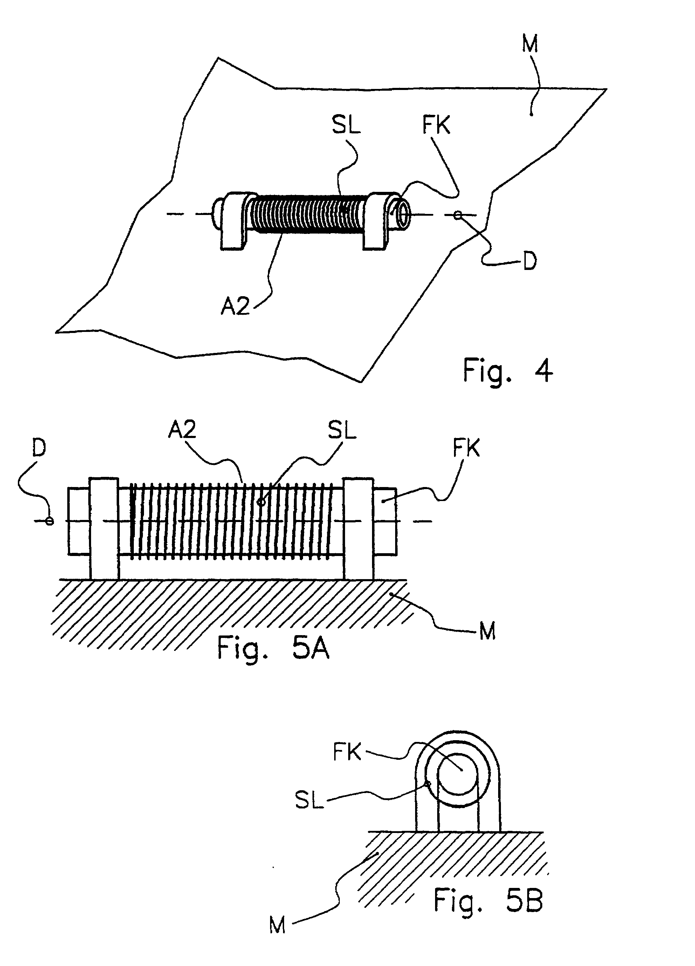

Eine erfindungsgemäße Anordnung für die Ausführung der Transponderantenne als langgestreckte Spule SL, insbesondere als Ferritspule, d.h. als langgestreckte Spule mit einem Ferritkern FK, ist in FIG. 4 in Schrägansicht skizziert. Die Ferritspule A2 ist auf bzw. in geringem Abstand von der metallischen Fläche M so angeordnet, daß die Längsachse D ( Direktor) der Spule parallel zu der metallischen Fläche M verläuft. Mit noch zufriedenstellender Funktion der Anordnung kann die Längsachse der Spule auch gegen die metallische Fläche geneigt sein und mit dieser eines spitzen Winkel < 45° einschließen. Die Ferritspule ist vorteilhafterweise von einem nicht eingezeichneten Trägerkörper gehalten, welcher zugleich auch Träger der Transponderelektronik sein kann.

Für eine Transponderanordnung mit einer Ferritspule nach FIG. 4 ist in FIG. 5A eine Seitenansicht mit Blickrichtung senkrecht und in FIG. 5B parallel zu Spulendirektor D skizziert. In den skizzierten Beispielen ist der Querschnitt der Spule annähernd kreisförmig. Vorteilhaft ist bei einer langgestreckten Spule analog zur Flachspulenausführung wiederum, wenn auf der der metallischen Fläche zugewandten Seite der langgestreckten Spule deren Umfanglinie einen zu der Fläche parallelen Abschnitt aufweist.

Der Signalaustausch zwischen dem Transponder und einem Abfragegerät erfolgt über ein magnetisches Wechselfeld, wobei die Antenne A1 bzw. A2 als Sende- und Empfangsantenne der Transponderanordnung dient. Für Sende- und Empfangsfall können dieselben oder ganz oder teilweise getrennte Teilspulen dienen. Für Senden und Empfang sind vorzugsweise verschiedene Frequenzen vorgesehen. Über das von der Sendeantenne des Abfragegeräts abgestrahlte Wechselfeld kann in an sich bekannter Weise auch die Leistung für den Betrieb des Transponders übertragen werden.

Die relative Ausrichtung von Transponderantenne und Antenne des Abfragegeräts erfordert mindestens eine Position mit guter Feldkopplung. Bei Abfragesystemen mit Relativbewegung von Abfragegerät und Transponderanordnung ist dies in Verbindung mit der erfindungsgemäßen Ausrichtung der Transponderantennen und dem Feldeinfluß der metallischen Fläche für fast beliebige relative Ausrichtungen gegeben, so daß für die Gestaltung der Systeme ein hohes Maß an Freiheit besteht.

Die für eine flache Spule und für eine langgestreckte Spule gegebenen Erläuterungen gelten analog für Spulen und Teilspulen kurzer Baulänge.

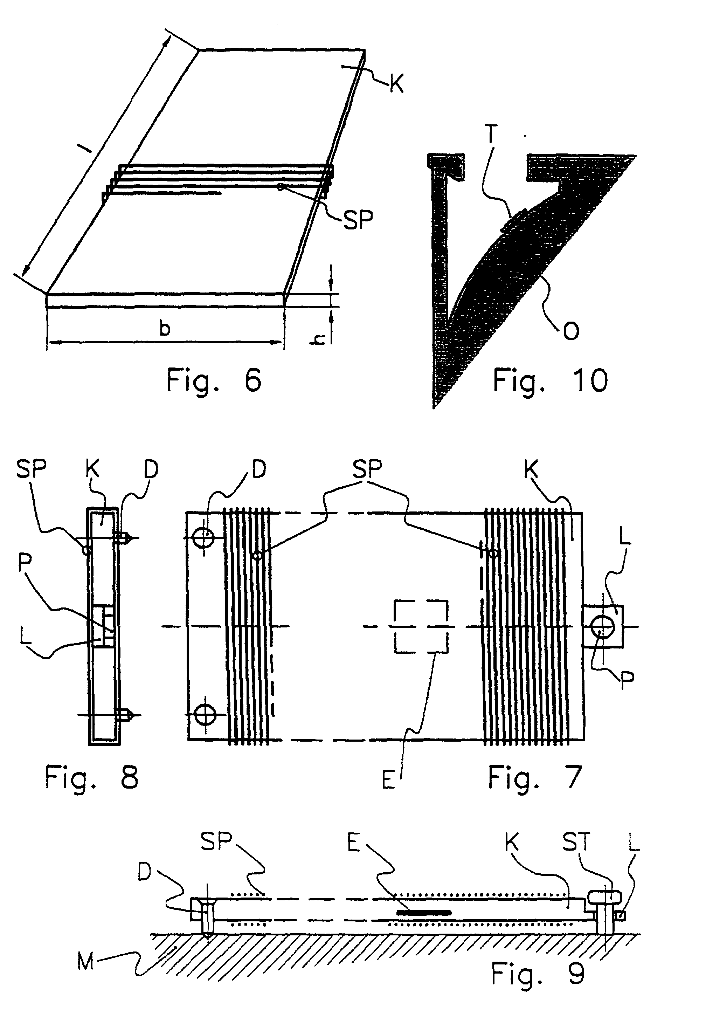

Die FIG. 6 bis 9 zeigen eine bevorzugte Ausführungsform eines Transponders für die Anordnung auf einer metallischen Fläche.

Der in FIG. 6 skizzierte Transponder weist einen flachen Trägerkörper K mit im wesentlichen rechteckiger Bauform mit der Länge 1, der Breite b und der Dicke h auf. Die Dicke h des Trägerkörpers K ist vorteilhafterweise wesentlich geringer als dessen Länge 1 und Breite b, h<<1,b. Eine Spulenanordnung SP mit einer Vielzahl von Spulenwindungen ist so auf den Trägerkörper gewickelt, daß der Windungsverlauf im wesentlichen senkrecht zu den Längsseiten (1) gerichtet ist und die Längsachse der Spule (Direktor, Hauptmagnetfeldrichtung bei Stromfluß durch die Spulenanordnung) im wesentlichen parallel zu den Längsseiten ist. Von der Spulenanordnung SP ist nur ein Abschnitt eingezeichnet. Vorzugsweise dehnt sich die Spulenanordnung im wesentlichen über die gesamte Länge des Trägerkörpers mit Ausnahme von Bereichen mit Befestigungseinrichtungen aus. Durch die geringe Dicke h des Trägerkörpers ergibt sich eine geringe Bauhöhe der Spulenfläche, so daß die gesamte Spulenfläche in dem besonders wirkungsvollen Bereich nahe der metallischen Oberfläche eines Objekts angeordnet werden kann, wenn der Transponder flach auf dieser Oberfläche befestigt wird. Die Spulenanordnung kann eine einzige Spule oder mehrere Teilspulen, z.B. für unterschiedliche Spulen oder Spulenkombinationen im Sende- und im Empfangsbetrieb umfassen. Die Höhe h des Trägerkörpers liegt vorzugsweise im Bereich von 1 bis 5mm die Breite b vorzugsweise im Bereich von 75 bis 80mm und die Länge 1 im Bereich von 5-80mm.

Der Trägerkörper besteht vorzugsweise aus nichtleitendem Material, insbesondere Kunstoff und/oder Ferrit. Das Trägerkörpermaterial kann auch ferromagnetisches Material umfassen, wobei erforderlichenfalls Maßnahmen an sich bekannter Art zur Unterdrückung von Wirbelströmen vorzusehen sind. Vorzugsweise ist der Trägerkörper aus mehreren Schichten, die eine Transponder-Elektronik-Baugruppe E (FIG. 2, 3) ein- und umschließen, aufgebaut.

Für die Befestigung des Transponders auf einem Objekt, z.B. auf der Oberfläche eines metallischen Behälters wie in FIG. 4 skizziert sind Befestigungseinrichtungen am Trägerkörper des Transponders vorgesehen. Im Bereich der Befestigungseinrichtungen ist der Trägerkörper nicht von der Spulenwicklung bedeckt. Die transponderseitigen Befestigungseinrichtungen können sowohl in mit objektseitigen Einrichtungen korrespondierender Form als auch vorzugsweise in objektunabhängiger Form ausgeführt sein. Ein vorteilhaftes Beispiel für die erstgenannte Form sind Durchbrüche (Bohrungen, Stanzungen, Aussparungen) im Trägerkörper, die auf bereits auf der Oberfläche des zu bestückenden Objekts vorhandenen Stiften oder dergleichen aufgesteckt und befestigt, z.B. vernietet werden. Die Durchbrüche können bereits während des Herstellungsprozesses des Trägerkörpers erzeugt werden.

Für die objektunabhängige Form der Befestigungseinrichtungen sind vorteilhafterweise zur Verschweißung geeignete Metalldorne in den Trägerkörper integriert, z.B. eingegossen oder nachträglich eingesetzt. Die Metalldorne erlauben eine schnelle und zuverlässige Befestigung durch Verschweißen mit der metallischen Fläche des Objekts und können hierfür auch einen eventuell vorhandenen nichtmetallischen Schutzüberzug der Metallfläche des Objekts durchdringen.

Die Anordnung der Befestigungseinrichtungen am Trägerkörper erfolgt vorteilhafterweise in Randbereichen des Trägerkörpers, beispielsweise in Ecken eines im wesentlichen rechteckigen Trägerkörpers oder in an den spulentragenden Mittelteil des Trägerkörpers anschließenden Befestigungslaschen.

Die FIG. 7, 8 und 9 zeigen beispielhaft zwei verschiedene Arten von Befestigungseinrichtungen. In der linken Figurenhälfte von FIG. 7, 9 sind Metalldorne D in einem nicht mit der Spule SP bewickelten Randbereich des Trägerkörpers in diesen eingesetzt, z.B. eingegossen, deren aus dem Trägerkörper herausragende Spitze z.B. mittels Bolzenschweißens mit einer metallischen Fläche M eines Objekts verschweißt wird. In der rechten Figurenhälfte ist die Ausführung der Befestigungseinrichtungen als Befestigungslasche L mit einem Durchbruch P dargestellt welcher über einen auf dem Objekt vorbereiteten Stift ST geschoben wird. Durch Abplatten, Umbiegen etc. des Stifts wird der Transponder auf dem Objekt fixiert. Mit E ist eine in den Trägerkörper eingebettete Transponder-Elektronik-Baugruppe bezeichnet. Die Spulenwicklungen sind in FIG. 4 der Übersicht halber nur zum Teil eingezeichnet. Nicht eingezeichnet sind auch Kontaktelemente zum Anschluß der Spulenanordnung an die Elektronik-Baugruppe E.

Mehrere Befestigungselemente an einem Transponder können gleichen oder unterschiedlichen Typs sein.

Der erfindungsgemäße Transponder ermöglicht mechanisch besonders unempfindliche Transponderanordnungen. Die Verschweißung über Metallelemente am Trägerkörper und/oder die Fortsetzung des Trägerkörpers in Form von Befestigungslaschen ermöglichen eine besonders einfache Befestigung auf dem Objekt.

Die im montierten Zustand dem Objekt abgewandte Fläche des Transponders ist vorzugsweise bedruckbar ausgeführt, z.B. durch eine über den Spulenwicklungen aufgebrachte weitere Schicht, die zugleich als Schutzschicht dient. Der Transponder kann auch in ein offenes oder geschlossenes Gehäuse zur Befestigung und/oder zum Schutz eingesetzt sein. Bei Ausführung der Spule als Luftspule kann diese in ein eine Aufnahmehülse aufweisendes Trägergehäuse eingesetzt sein.

## Patentansprüche

1. Transponderanordnung mit einer auf einer elektrisch leitenden Fläche (M) angeordneten Transponderantenne mit einer oder mehreren Sende- und Empfangs-Antennenspule, **dadurch gekennzeichnet, daß** Sende- und Empfangsspulen so ausgerichtet sind, daß die Hauptmagnetfeldrichtungen mit der leitenden Fläche einen Winkel <45°, insbesondere <15° einschließen.

2. Transponderanordnung nach Anspruch 1, **dadurch gekennzeichnet, daß** die Spulen als flache Luftspulen ausgeführt sind, deren Spulenflächen senkrecht zu der leitenden Fläche angeordnet sind.

3. Transponderanordnung nach Anspruch 2 oder 3, **dadurch gekennzeichnet, daß** die Spulenflächen mindestens einen geraden Randabschnitt aufweisen und dieser auf der leitenden Fläche verläuft.

4. Transponderanordnung nach Anspruch 1, **dadurch gekennzeichnet, daß** die Spulen als langgestreckte Spulen ausgeführt sind und die Spulenlängsachsen parallel zu der leitenden Fläche ausgerichtet sind.

5. Transponderanordnung nach Anspruch 4, **dadurch gekennzeichnet, daß** die Spulen einen Ferritkern enthalten.

6. Transponderanordnung nach einem der vorhergehenden Ansprüche, **dadurch gekennzeichnet, daß** die Transponderantenne durch ein Gehäuse aus nichtleitendem Material geschützt ist.

7. Transponderanordnung nach einem der Ansprüche 1 bis 6, **dadurch gekennzeichnet, daß** die Transponder antenne mit einer auf einen Trägerkörper gewickkelten Spulenanordnung mit einer Vielzahl von Spulenwindungen ausgeführt ist, wobei der Trägerkörper als flacher Körper mit einer im Vergleich zu seinen Querabmessungen geringen Höhe ausgebildet ist und die Spulenwindungen einen Teil der Oberfläche des Trägerkörpers bedecken und so um den Trägerkörper gewickelt sind, daß die Längsachse der Spule parallel zur Körperebene des flachen Körpers ausgerichtet ist.

8. Transponderanordnung nach Anspruch 7, **dadurch gekennzeichnet, daß** der Trägerkörper Befestigungseinrichtungen an nicht von den Spulenwicklungen bedeckten Teilen der Oberfläche aufweist.

9. , Transponderanordnung nach Anspruch 7, **dadurch gekennzeichnet, daß** der Trägerkörper einen in den Querabmessungen im wesentlichen rechteckigen Mittelteil aufweist und sich von diesem in Form von Befestigungslaschen Befestigungseinrichtungen fortsetzen.

10. Transponderanordnung nach Anspruch 8 oder Anspruch 9, **dadurch gekennzeichnet, daß** die Befestigungseinrichtungen mindestens einen Durchbruch durch den flachen Trägerkörper umfassen.

11. Transponderanordnung nach einem der Ansprüche 7 bis 10, **dadurch gekennzeichnet, daß** die Spulenanordnung mehrere gleich ausgerichtete Teilspulen umfaßt.

## Claims

1. Transponder arrangement having a transponder antenna arranged on an electrically conductive area (M) and having one or more transmitting and receiving antenna coils, **characterized in that** transmitting and receiving coils are oriented in such a way that the main magnetic field directions form an angle of <45°, in particular <15°, with the conductive area.

2. Transponder arrangement according to Claim 1, **characterized in that** the coils are embodied as planar air-core coils whose coil areas are arranged perpendicularly to the conductive area.

3. Transponder arrangement according to Claim 2 or 3, **characterized in that** the coil areas have at least one straight edge section and the latter runs on the conductive area.

4. Transponder arrangement according to Claim 1, **characterized in that** the coils are embodied as elongate coils and the longitudinal axes of the coils are oriented parallel to the conductive area.

5. Transponder arrangement according to Claim 4, **characterized in that** the coils contain a ferrite core.

6. Transponder arrangement according to one of the preceding claims, **characterized in that** the transponder antenna is protected by a housing made of non-conductive material.

7. Transponder arrangement according to one of Claims 1 to 6, **characterized in that** the transponder antenna is embodied with a coil arrangement, wound onto a carrier body, with a multiplicity of coil turns, the carrier body being designed as a planar body having a small height in comparison with its transverse dimensions, and the coil turns covering part of the surface of the carrier body and being wound around the carrier body in such a way that the longitudinal axis of the coil is oriented parallel to the body plane of the planar body.

8. Transponder arrangement according to Claim 7, **characterized in that** the carrier body has fixing devices on parts of the surface which are not covered by the coil windings.

9. Transponder arrangement according to Claim 7, **characterized in that** the carrier body has a central part which is essentially rectangular in the transverse dimensions, and fixing devices extend from the said central part in the form of fixing lugs.

10. Transponder arrangement according to Claim 8 or Claim 9, **characterized in that** the fixing devices comprise at least one perforation to the planar carrier body.

11. Transponder arrangement according to one of Claims 7 to 10, **characterized in that** the coil arrangement comprises a plurality of identically oriented partial coils.

## Revendications

1. Dispositif à transpondeur présentant une antenne de transpondeur disposée sur une surface conductrice d'électricité (M), avec une ou plusieurs bobines d'antenne émettrices et réceptrices, **caractérisé en ce que** les bobines émettrices et réceptrices sont orientées de telle manière que les directions principales du champ magnétique renferment avec la surface conductrice un angle < 45°, en particulier < 15°.

2. Dispositif à transpondeur selon la revendication 1, **caractérisé en ce que** les bobines sont exécutées comme des bobines à air plates, dont les surfaces des bobines sont disposées perpendiculairement à la surface conductrice.

3. Dispositif à transpondeur selon la revendication 2 ou 3, **caractérisé en ce que** les surfaces de bobines présentent au moins une partie de bord plane et **en ce que** celle-ci s'étend sur la surface conductrice.

4. Dispositif à transpondeur selon la revendication 1, **caractérisé en ce que** les bobines sont exécutées comme des bobines étendues en longueur et **en ce que** les axes longitudinaux des bobines sont orientés parallèlement à la surface conductrice.

5. Dispositif à transpondeur selon la revendication 4, **caractérisé en ce que** les bobines contiennent un noyau en ferrite.

6. Dispositif à transpondeur selon l'une quelconque des revendications précédentes, **caractérisé en ce que** l'antenne du transpondeur est protégée par un boîtier en matériau non conducteur.

7. Dispositif à transpondeur selon l'une quelconque des revendications 1 à 6, **caractérisé en ce que** l'antenne du transpondeur est exécutée avec un dispositif de bobine enroulé sur un corps support, présentant une pluralité d'enroulements de bobine, le corps support étant conformé comme un corps plat présentant une hauteur réduite en comparaison de ses dimensions transversales et **en ce que** les enroulements de bobine couvrent une partie de la surface du corps support et sont enroulés autour du corps support de sorte que l'axe longitudinal de la bobine soit orienté parallèlement au plan de corps du corps plat.

8. Dispositif à transpondeur selon la revendication 7, **caractérisé en ce que** le corps support présente des dispositifs de fixation sur des parties de la surface non recouvertes par les enroulements de bobine.

9. Dispositif à transpondeur selon la revendication 7, **caractérisé en ce que** le corps support présente une partie médiane essentiellement rectangulaire dans les dimensions transversales **en ce que** des dispositifs de fixation prolongent celle-ci sous forme de pattes de fixation.

10. Dispositif à transpondeur selon la revendication 8 ou la revendication 9, **caractérisé en ce que** les dispositifs de fixation comprennent au moins un percement à travers le corps support plat.

11. Dispositif à transpondeur selon l'une quelconque des revendications 7 à 10, **caractérisé en ce que** le dispositif de bobine comprend plusieurs bobines partielles de même orientation.
